# EUROPÄISCHE PATENTSCHRIFT

(11) **EP 4 100 229 B1**
(45) Veröffentlichungstag und Bekanntmachung des Hinweises auf die Patenterteilung: **14.05.2025**
(21) Anmeldenummer: 21709386.3
(22) Anmeldetag: 01.03.2021
(51) Int. Cl.: B29C 49/04, B29C 49/42, B29C 49/48, B29C 49/56, B29C 49/76, B29C 49/78, B29C 49/20, B29C 49/46, B29L 31/00, B29C 49/00

(54) **VERFAHREN ZUM HERSTELLEN EINES BEHÄLTERERZEUGNISSES UND VORRICHTUNG ZUR DURCHFÜHRUNG DES VERFAHRENS**
METHOD FOR PRODUCING A CONTAINER PRODUCT, AND DEVICE FOR CARRYING OUT THE METHOD
PROCÉDÉ DE PRODUCTION D'UN PRODUIT DE CONTENANT, ET DISPOSITIF DE MISE EN OEUVRE DU PROCÉDÉ

(30) Priorität: 01.04.2020 DE 102020002077
(43) Veröffentlichungstag der Anmeldung: 14.12.2022
(73) Patentinhaber: kocher-plastik Maschinenbau GmbH, 74429 Sulzbach-Laufen (DE)
(72) Erfinder: SAUTER, Roland, 74429 Sulzbach-Laufen (DE); MUFF, Alexander, 6018 Buttisholz (CH); SCHULTES, Michael, 74579 Fichtenau (DE); MARK, Frank, 71579 Spiegelberg (DE); DORSCH, Tobias, 74423 Obersontheim (DE); FRIES, Lasse, 73434 Aalen (DE); HÖGLINGER, Thomas, 74423 Obersontheim (DE); JACOB, Helmut, 76275 Ettlingen (DE); PREZYNA, Patryk, 70736 Fellbach (DE); REICHART, Harald, 74405 Gaildorf (DE); SPEISER, Roland, 73453 Abtsgmünd (DE)
(74) Vertreter: Bartels und Partner, Patentanwälte
(86) Internationale Anmeldenummer: PCT/EP2021/055052
(87) Internationale Veröffentlichungsnummer: WO 2021/197737

(56) Entgegenhaltungen:
- DE-A1- 3 231 859
- DE-B- 1 136 095
- DE-B- 1 163 000
- US-A- 4 153 408
- US-A1- 2017 173 842

## Beschreibung

Die Erfindung betrifft ein Verfahren zum Herstellen mindestens eines geformten, befüllten und verschlossenen Behältererzeugnisses, wie beispielsweise Flaschen oder Ampullen, und eine Vorrichtung zur Durchführung des Verfahrens.

Die WO 02/49821 A2 offenbart ein Verfahren zum Blasformen, Befüllen und Schließen von Behältern, wie Ampullen, bei dem zumindest ein Schlauch plastifizierten Kunststoffmaterials in eine geöffnete Form hinein extrudiert wird. Durch das Schließen der Form wird der Schlauch an seinem vorauseilenden Ende verschweißt. Zudem wird der Schlauch oberhalb der Form zur Bildung einer Füllöffnung mittels eines Trennelements durchtrennt. Die Form mit dem darin befindlichen Schlauchabschnitt wird sodann in eine Füllposition bewegt, in der der Behälter befüllt wird, nachdem dieser durch Erzeugen eines am Schlauch wirksamen und diesen aufweitenden Druckgradienten in der Form ausgebildet worden ist. Nach der Befüllung wird der sich noch in der Form befindliche Behälter verschlossen. Zudem ist eine entsprechende Vorrichtung offenbart.

Weitere Verfahren gehen aus der US 2017/0173842 A1, DE 11 36 095 B, DE1163000B, US4153408A und DE3231859A1 hervor.

US2017/0173842 offenbart grundsätzlich:Ein

Verfahren zum Herstellen mindestens eines geformten und verschlossenen Behältererzeugnisses mit zumindest den folgenden Verfahrensschritten:
- Extrusion eines Schlauches mittels einer Extrusionseinrichtung in vertikaler Extrusionsrichtung in einer Vorformposition;
- Schließen des Schlauches an seinem unteren Ende und Abtrennen desselben an seinem oberen offenen Ende;
- Transport des derart abgelängten Vorformlings mittels einer Greifereinrichtung in linearer Transportrichtung quer zur Extrusionsrichtung von der Vorformposition in ein geöffnetes Formwerkzeug;
- Übergabe des Vorformlings in das geöffnete Formwerkzeug mittels der Greifereinrichtung in einer Hauptformposition;
- Schließen des Formwerkzeuges zwecks Weiterformen des Vorformlings durch einen Druckgradienten;
- Rücktransport der Greifereinrichtung zu der Vorformposition für eine erneute Abfolge der vorstehenden Verfahrensschritte.

Der Erfindung liegt die Aufgabe zugrunde, das bekannte Blasform-, Füll- und Schließverfahren hinsichtlich seiner Effizienz weiter zu verbessern.

Eine dahingehende Aufgabe löst ein Verfahren zum Herstellen mindestens eines geformten, befüllten und verschlossenen Behältererzeugnisses mit den Merkmalen des Patentanspruchs 1 in seiner Gesamtheit.

Das erfindungsgemäße Verfahren ist charakterisiert durch zumindest die folgenden Verfahrensschritte:
- Extrusion eines Schlauches mittels einer Extrusionseinrichtung unter Verwendung von Stützgas in vertikaler Extrusionsrichtung in einer Vorformposition;
- Schließen des Schlauches an seinem unteren Ende und Abtrennen desselben an seinem oberen offenen Ende;
- Transport des derart abgelängten Vorformlings mittels einer Greifereinrichtung in linearer Transportrichtung quer zur Extrusionsrichtung von der Vorformposition in ein geöffnetes Formwerkzeug;
- Übergabe des Vorformlings in das geöffnete Formwerkzeug mittels der Greifereinrichtung in einer Hauptformposition;
- Schließen des Formwerkzeuges zwecks Weiterformen des Vorformlings durch einen Druckgradienten;
- Befüllen und Verschließen des Vorformlings; und
- Rücktransport der Greifereinrichtung zu der Vorformposition für eine erneute Abfolge der vorstehenden Verfahrensschritte.

Der Schlauch wird wärmeweich extrudiert, wobei unter dem Begriff "wärmeweich" ein plastifizierter Zustand eines thermoplastischen Kunststoffes zu verstehen ist, bei dem ohne Zufuhr von zusätzlicher Wärme eine Umformung mittels eines Druckgradienten und/oder eine Verschweißung möglich ist. Wärmeweiche Vorformlinge haben - je nach Kunststoff - typischerweise eine durchschnittliche Temperatur von 150 °C bis 210 °C.

Als Kunststoffe für das erfindungsgemäße Verfahren sind unter anderem teilkristalline Polyolefine geeignet, wie beispielsweise Polyethylen (PE), insbesondere Polyethylen geringer Dichte (PE-LD), Polyethylen hoher Dichte (PE-HD) sowie Polypropylen (PP). Vorteilhaft lassen sich auch amorphe Polyolefine wie beispielsweise Cycloolefin-Polymere (COP) und Cycloolefincopolymere (COC) erfindungsgemäß verarbeiten. Auch mehrschichtige Behälter - wie in DE 103 47 908 A1 beschrieben - lassen sich mit dem erfindungsgemäßen Verfahren herstellen.

Durch die Merkmale des Anspruchs 1 ist - im Vergleich zu dem aus dem Stand der Technik bekannten Verfahren - aufgrund der stationären Anordnung des Formwerkzeuges dieses erfindungsgemäß nicht bei jedem Verfahrensdurchlauf von der Extrusionseinrichtung zu der Form-Füll-Verschließstation, im Folgenden auch kurz als Verschließstation bezeichnet, zu bewegen und umgekehrt. Dadurch entfällt nicht nur das Bewegen des Formwerkzeuges, das bei Vorsehen von mehreren Kavitäten zur Herstellung jeweils eines Behältererzeugnisses ein hohes Gewicht aufweisen kann, sondern ist auch eine für die Herstellung des Behältererzeugnisses exakte Ausrichtung der Formhälften des insoweit stationär angeordneten Formwerkzeuges zueinander erleichtert. Zusätzlich sind aufgrund des erfindungsgemäß stationär angeordneten Formwerkzeuges, dessen Anschlüsse, beispielsweise in Form einer Energie-, einer Kühlmedien- und/oder Druckluftversorgung, nicht bei Verfahrbewegungen des Formwerkzeuges von der Extrusionseinrichtung zu der Verschließstation und umgekehrt mitzubewegen. Dadurch ist die Energieaufnahme bei einer Durchführung des Verfahrens reduziert, so dass das Verfahren einfach und kostengünstig durchführbar ist.

Des Weiteren ist dadurch, dass der Schlauch mittels der von dem Formwerkzeug separaten Greifereinrichtung an seinem unteren Ende unter Aufbringen einer Schließkraft verschlossen wird, eine gegenüber der Schließkraft der Greifereinrichtung geringere Schließkraft des Formwerkzeuges für ein Verschweißen in diesem Bereich aufzubringen.

Dadurch, dass der wärmeweiche Vorformling nicht direkt in eine geöffnete Form hinein extrudiert wird, sondern mittels der Greifereinrichtung gehalten und von der Vorformposition in die Hauptformposition bewegt wird, ist der Vorformling bevor dieser in das Formwerkzeug übergeben wird für weitere zusätzliche Verfahrensschritte weitgehend frei zugänglich. So kann schon in der Vorformposition durch ein formgebendes Werkzeug, wie ein Kalibrierelement, das um den wärmeweichen Schlauch vor dessen Abtrennung positioniert wird, der Außendurchmesser des wärmeweichen Schlauches begrenzt werden. Die Verwendung eines Kalibrierelementes hat sich insbesondere bei dünnwandigen Vorformlingen, d.h. Vorformligen mit einer durchschnittlichen Wandstärke von weniger als circa 0,2 cm, bewährt. Weiterhin ist es möglich, zur Verbesserung der Eigenschaften des Vorformlings, insbesondere für eine gezielte Modifikation seiner Oberflächen, den Vorformling auf seiner innen- und/oder außenseitigen Oberfläche mittels eines Fluides zu behandeln, für medizinische Zwecke beispielsweise mit steriler Luft oder einem Inertgas zu spülen. Ferner ist es möglich, die Temperatur des gesamten Vorformlings oder eines Teils desselben durch Kühl-, Heiz-, Abschirm- und/oder Reflexionseinrichtungen oder durch die Bewegungszeit oder -geschwindigkeit mittels einer Steuereinrichtung zu steuern. Zudem ist eine Prüfung von Abweichungen zum vorgebbaren Soll eines extrudierten Vorformlings, beispielsweise hinsichtlich Abmessungen, Gewicht, Temperatur, Transparenz und/oder Partikeleinlagerungen, besonders einfach und kostengünstig durchführbar, so dass eine auf einer entsprechenden Prüfung basierende Regelung des Extrusionsprozesses genauso besonders einfach und kostengünstig durchführbar ist. Somit ist das Verfahren im Ergebnis besonders effizient durchführbar. Dies hat so keine Entsprechung im Stand der Technik.

Insbesondere bei Vorformlingen geringen Gewichts und/oder geringen Volumens würde man bei schnellen Bewegungen Deformationen, räumliche Ablenkungen und/oder bei einem Simultantransport mehrerer Vorformlinge ein Aneinanderkleben erwarten. Überraschenderweise hat sich gezeigt, dass sich auch Vorformlinge mit einem Gewicht von weniger als circa 0,07 kg und/oder einem Volumen von weniger als 500 ml problemlos mithilfe der Greifereinrichtung bewegen lassen, wenn der wärmeweiche Vorformling an zwei Stellen gehalten wird. In diesem Fall hat sich zusätzlich überraschenderweise gezeigt, dass es nicht zu einer eigentlich zu erwartenden signifikanten inhomogenen Ausdickung bzw. Wulstbildung des Vorformlings während dessen Transports kommt, wenn die Transportzeit in der Greifereinrichtung weniger als circa zwei bis drei Sekunden beträgt.

Gegenstand der Erfindung ist auch eine Vorrichtung zum Durchführen eines voranstehend beschriebenen Verfahrens, mit zumindest den folgenden Komponenten: Extrusionseinrichtung, Greifereinrichtung und Formwerkzeug.

Weitere Ausgestaltungen des erfindungsgemäßen Verfahrens und der erfindungsgemäßen Vorrichtung sind Gegenstand der Unteransprüche.

Im Folgenden wird ein erfindungsgemäßes Verfahren zum Herstellen mindestens eines geformten, befüllten und verschlossenen Behältererzeugnisses anhand einer erfindungsgemäßen Vorrichtung zum Durchführen eines derartigen Verfahrens gemäß der Zeichnung näher erläutert. Dabei zeigen in prinzipieller und nicht maßstäblicher Darstellung die
- Fig. 1: eine perspektivische Ansicht auf die erfindungsgemäße Vorrichtung, wobei ein mittels einer Extrusionseinrichtung extrudierter Schlauch in einer Vorformposition zwischen jeweils einem geöffneten Greifbackenpaar zweier Zangen einer Greifereinrichtung angeordnet ist;
- Fig. 2: eine gegenüber Fig. 1 vergrößerte Teilansicht auf die Vorrichtung aus Fig. 1 im Bereich der Greifbackenpaare der Zangen, wobei zwischen den Zangen ein geöffnetes Kalibrierelement vorgesehen ist;
- Fig. 3: eine perspektivische Ansicht auf das geöffnete Kalibrierelement aus Fig. 2;
- Fig. 4: in einer perspektivischen Ansicht die Vorrichtung aus Fig. 1, wobei die Greifbackenpaare der Zangen geschlossen sind und das obere Greifbackenpaar den Schlauch anliegend umfasst;
- Fig. 5: in einer perspektivischen Ansicht die Vorrichtung aus Fig. 2, wobei das geschlossene Kalibrierelement und das obere Greifbackenpaar den Schlauch beabstandet umfassen;

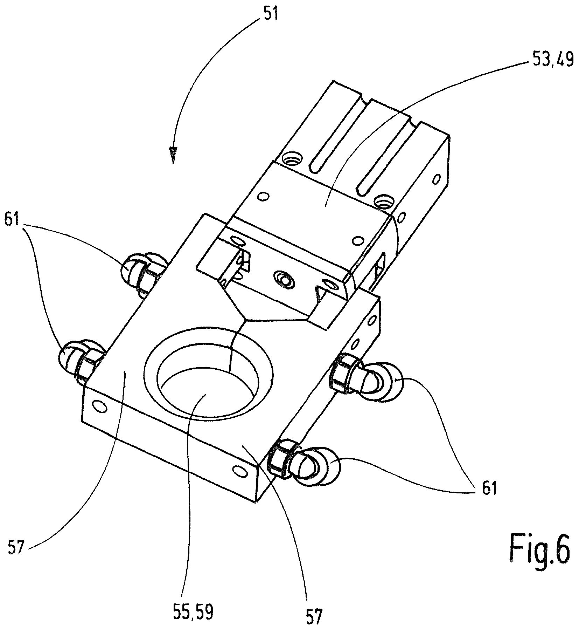

- Fig. 6: in einer perspektivischen Ansicht das Kalibrierelement aus Fig. 3 in einem geschlossenen Zustand;
- Fig. 7: in einer perspektivischen Ansicht die Vorrichtung aus Fig. 5, wobei das Kalibrierelement und das obere Zangenpaar den Schlauch anliegend umfassen;
- Fig. 8: in einer perspektivischen Ansicht die Vorrichtung aus Fig. 1, wobei ein Vorformling mittels der Greifereinrichtung in einer Hauptformposition gehalten zwischen geöffneten Halte-, Kopf- und Formbacken eines Formwerkzeugs angeordnet ist;
- Fig. 9: in einer perspektivischen Ansicht die Vorrichtung aus Fig. 8, wobei die Halte-, Kopf- und Formbacken geschlossen sind; und
- Fig. 10: teilweise in einem Längsschnitt, teilweise in Ansicht einzelne Schritte eines Blasform-, Füll- und Schließprozesses.

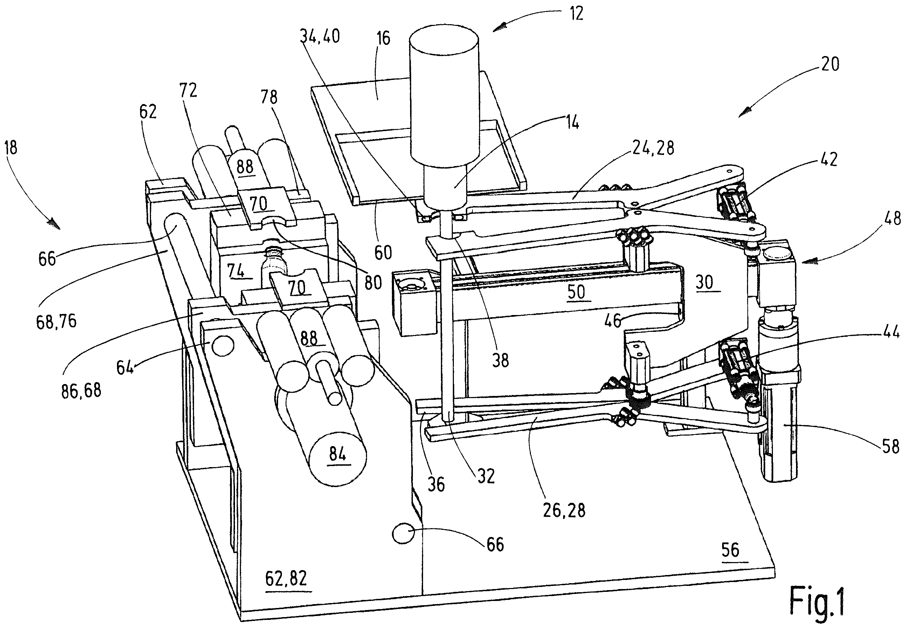

Fig. 1 zeigt eine erfindungsgemäße Vorrichtung zum Durchführen eines erfindungsgemäßen Verfahrens zum Herstellen mindestens eines blasgeformten, befüllten und verschlossenen Behältererzeugnisses 10, insbesondere hergestellt aus mindestens einem Kunststoff. Die Vorrichtung weist eine stationäre Extrusionseinrichtung 12 mit einem Schlauchkopf 14, eine verfahrbare Schneideinrichtung 16, ein stationär auf- und zufahrbares Formwerkzeug 18 und eine verfahrbare Greifereinrichtung 20 auf zum Transportieren eines mittels des Schlauchkopfs 14 extrudierten und mittels der Schneideinrichtung 16 abgelängten Vorformlings 22 von der Extrusionseinrichtung 12 zu dem Formwerkzeug 18.

Zudem weist die Vorrichtung eine in das Innere des Schlauches 32 gerichtete Stützgaszufuhr auf, die in den Figuren nicht dargestellt ist und die der in der DE 102 45 318 A1 offenbarten Stützgaszufuhr entsprechen kann. Optional kann die Vorrichtung ein Kalibrierelement 51 für eine abschnittsweise Kalibrierung des Außendurchmessers des wärmeweichen Schlauches 32 in der Vorformposition aufweisen.

Die Greifereinrichtung 20 weist zwei Zangen 24, 26 auf, die, sich jeweils in einer horizontalen Ebene erstreckend, parallel zueinander ausgerichtet sind, so dass diese deckungsgleich übereinander angeordnet sind. Jede Zange 24, 26 weist ein Paar abgewinkelter Schenkel 28 auf, die einander entsprechen. Die Schenkel 28 jeder Zange 24, 26 sind nebeneinander angeordnet und spiegelverkehrt zueinander an den freien Enden einer U-förmigen Verbindungsplatte 30 angelenkt, die sich vertikal zwischen den Zangen 24, 26 erstreckt. Die Verbindungsplatte 30 hält die Zangen 24, 26 in einem derartigen Abstand zueinander, dass ein mittels des Schlauchkopfs 14 der Extrusionseinrichtung 12 extrudierter Schlauch 32 an seinen beiden Endbereichen von jeweils einer Zange 24, 26 aufnehmbar ist. Dafür weist jede Zange 24, 26 an ihrem dem Formwerkzeug 18 zugewandten Ende ein paar von Greifbacken 34, 36 auf.

Die Greifbacken 34 der ersten Zange 24, die dem Schlauchkopf 14 nächstliegend ist, weisen auf ihren einander gegenüberliegenden Seiten jeweils eine halbkreisförmige Aussparung 38 auf, so dass die beiden geschlossenen Greifbacken 34 der ersten Zange 24 zusammen eine kreisförmige Aussparung in Form einer Aufnahmeöffnung ausbilden, deren Durchmesser geringfügig größer ist als der Durchmesser des extrudierten Schlauchs 32. In die Greifbacken 34 der ersten Zange 24 ist ausgehend von ihren einander gegenüberliegenden Innenseiten jeweils ein Schlitz 40 eingebracht, der über einen sich durch den jeweiligen Schenkel 28 erstreckenden Kanal mit einer in den Figuren nicht dargestellten Vakuumpumpe verbunden ist zwecks Erzeugen eines Unterdrucks zum umfänglichen Halten des Schlauches 32 an seinem der Extrusionseinrichtung 12 nächstliegenden oberen Endbereich durch Ansaugen des Schlauches 32 mittels der beiden Greifbacken 34 der ersten Zange 24. Die Greifbacken 36 der zweiten Zange 26 sind aussparungsfrei ausgebildet, so dass diese im geschlossenen Zustand unter Bildung eines Klemmspaltes flächig aneinander anliegen. Dadurch kann der noch wärmeweiche, extrudierte Schlauch 32 an seinem der Extrusionseinrichtung 12 entferntest angeordneten Endbereich mittels der zweiten Zange 26 hermetisch verschlossen und festgehalten werden. Zwischen den Schenkeln 28 jeder Zange 24, 26 ist in ihrem von dem Formwerkzeug 18 entferntest liegenden unteren Endbereich jeweils ein Antrieb 42, 44 angeordnet, der endseitig an beiden Schenkeln 28 angelenkt ist zwecks synchroner, gleichzeitiger Betätigung der jeweiligen Zange 24, 26.

Es kann eine in den Figuren nicht dargestellte Temperiereinrichtung vorgesehen sein, die einen Kühlkreislauf aufweist, der die Greifbacken 34, 36 einer jeweiligen Zange 24, 26 kühlt zwecks Unterbinden eines ungewollten Festklebens des Schlauches 32 bzw. Vorformlings 22 an den Greifbacken 34, 36 der jeweiligen Zange 24, 26. Zum Greifen mehrerer in einer Reihe nebeneinander angeordneter Schläuche 32 kann die jeweilige Zange 24, 26 alternativ zur vorliegenden Ausbildung als Winkelgreifer in Form eines Parallelgreifers (nicht dargestellt) ausgebildet sein. Auch kann die erste Zange 24 dahingehend mehrteilig ausgebildet sein, dass deren Greifbacken 34 auswechselbar sind zwecks Anpassung der Aufnahmeöffnung 38 der ersten Zange 24 an einen vorgegebenen Schlauchdurchmesser.

Die U-förmige Verbindungsplatte 30 ist einseitig an ihrem Mittenbereich fest mit einem Schlitten 46 verbunden, der mittels eines Linearantriebes 48 auf einer Schiene 50 verfahrbar ist. Die Schiene 50 ist in ihren Endbereichen mittels jeweils eines Fußteils 52, 54 auf einer rechteckigen Basisplatte 56 der Vorrichtung aufgeständert und erstreckt sich parallel zur Basisplatte 56 ausgerichtet in Längsrichtung der Basisplatte 56 und der Zangen 24, 26, die ebenfalls parallel zur Basisplatte 56 ausgerichtet sind. Beide Fußteile 52, 54 sind jeweils als L-förmiger Winkel ausgebildet und sind voneinander beabstandet auf der dem Schlauchkopf 14 abgewandten Seite mit der Schiene 50 fest verbunden. Ein Antrieb 58 des Linearantriebes 48 greift an dem Ende der Schiene 50 an, dass dem Schlauchkopf 14 der Extrusionseinrichtung 12 abgewandt ist und gleichzeitig in Längsrichtung der Basisplatte 56 über die Basisplatte 56 hervorragt, und erstreckt sich von dort aus vertikal von der Schiene 50 weg, hin zu der Basisplatte 56.

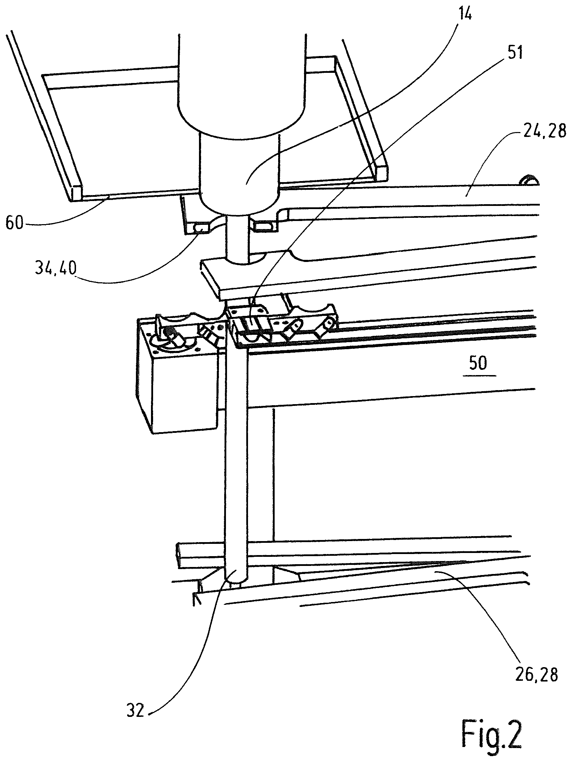

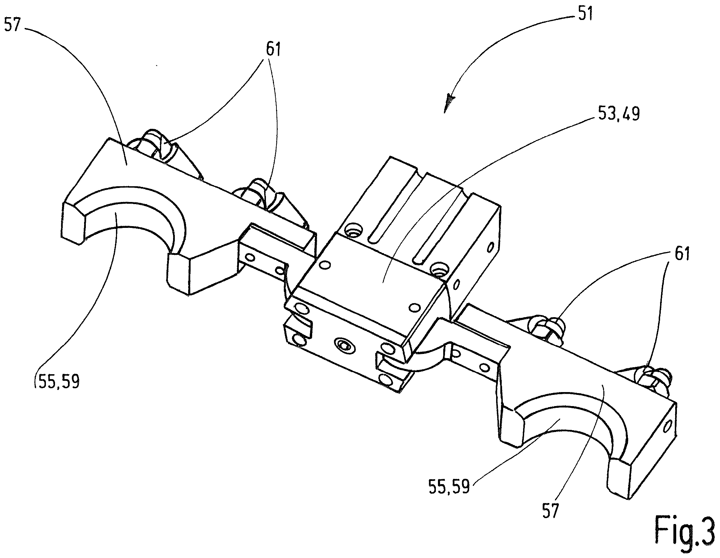

Vorteilhaft kann eine abschnittsweise Kalibrierung des Außendurchmessers des wärmeweichen Schlauches 32 in der Vorformposition erfolgen. Dazu ist ein, vorzugsweise stationär angeordnetes, Kalibrierelement 51 (Fig. 2 und 3) vorgesehen, dass ein im Wesentlichen rechteckiges Basisteil 49 und zwei Kalibrierbacken 57 aufweist. Mittels des Kalibrierelementes 51 ist der Außendurchmesser desjenigen Schlauchteils begrenzbar, der von den Kalibrierbacken 57 des geschlossenen Kalibrierelements 51 umfasst ist. Die Halterung des Kalibrierelements 51 ist in den Figuren nicht dargestellt.

Jeweils eine Kalibrierbacke 57 ist an den Endbereichen der beiden sich in Längsrichtung des Basisteils erstreckenden Seitenflächen des Basisteils 49 mit einem Freiheitsgrad derart angelenkt, dass die Kalibrierbacken 57 zwischen einer geöffneten Stellung, in der sich diese von den Seitenflächen des Basisteils 49 senkrecht wegerstrecken, und einer geschlossenen Stellung bewegbar sind, in der die Kalibrierbacken 57 sich von der freien Stirnseite des Basisteils 49 wegersteckend in Kontakt miteinander sind. Das Basisteil 49 weist einen Antrieb 53 auf zum Bewegen der Kalibrierbacken 57 von der geöffneten Stellung in die geschlossene Stellung und umgekehrt. In den in der geschlossenen Stellung der Kalibrierbacken 57 einander zugewandten einen Seitenflächen der Kalibrierbacken 57 ist jeweils eine halbkreisförmige Ausnehmung 59 eingebracht, die zusammen in der geschlossenen Stellung der Kalibrierbacken 57 eine kreisförmige Aufnahmeöffnung 55 für den Schlauch 32 ausbilden. Vorzugsweise ist der Durchmesser der Aufnahmeöffnung 55 auf die Größe des Halses des herzustellenden Behältererzeugnisses 10 abgestimmt.

Die der einen Seitenfläche mit der Ausnehmung 59 gegenüberliegende andere Seitenfläche der jeweiligen Kalibrierbacke 57 ist eben ausgebildet und weist vorzugsweise zwei Anschlüsse 61 auf für eine in den Figuren nicht dargestellte Temperiereinrichtung. Die Temperiereinrichtung dient zum Kühlen der Kalibrierbacken 57, so dass der Schlauch 32 gezielt lokal abkühlbar ist und gegebenenfalls ein unerwünschtes Ankleben des wärmeweichen Schlauches 32 an den Kalibrierbacken 57 verhindert ist.

Zum Trennen des Vorformlings 22 von dem mittels des Schlauchkopfes 14 extrudierten Schlauchs 32 zwischen dem Schlauchkopf 14 der Extrusionseinrichtung 12 und, insbesondere den Greifbacken 34 der ersten Zange 24, der Greifereinrichtung 20 ist die Schneideinrichtung 16 in Form eines Schneidmessers vorgesehen, das parallel zur Basisplatte 56 ausgerichtet ist und das mit seiner Schneidkante 60 in Querrichtung zur Schiene 50 und zur Basisplatte 56 zwischen den Schlauchkopf 14 und die Greifereinrichtung 20 vor und zurück verfahrbar ist. Das Schneidmesser kann beispielsweise in Form eines sogenannten Heißmessers beheizt oder in einer Ultraschallfrequenz schwingend ausgebildet sein. Derartige Ausgestaltungen des Schneidmessers 60 sind aus dem Stand der Technik bekannt, weswegen vorliegend nicht näher auf die jeweilige Ausgestaltung eingegangen wird.

An dem dem Antrieb 58 des Linearantriebs 48 abgewandten Endbereich der Basisplatte 56 sind zwei zu einander parallel ausgerichtete und stationäre Gehäuseplatten 62 angeordnet, die sich, in Längsrichtung zu der Basisplatte 56 ausgerichtet, in Richtung des Schlauchkopfs 14 von der Basisplatte 56 wegerstrecken. An jeder Gehäuseplatte 62 ist an ihrem dem Antrieb 58 des Linearantriebs 48 und dem der Basisplatte 56 abgewandten Randbereich ein sich von der Basisplatte 56 wegerstreckender Fortsatz 64 vorgesehen. In dem Bereich des Fortsatzes 64 der Gehäuseplatten 62 sowie in einem dem Antrieb 58 des Linearantriebs 48 sowie der Basisplatte 56 zugewandten Randbereich der Gehäuseplatten 62 erstreckt sich zwischen diesen Gehäuseplatten 62 jeweils ein Führungsbolzen 66, der an seinen beiden Enden an jeder Gehäuseplatte 62 festgelegt ist.

Zwischen den Gehäuseplatten 62 sind als Werkzeugträger zwei Tragplatten 68 angeordnet, die von den Führungsbolzen 66 durchgriffen sind und entlang der Führungsbolzen 66 verfahrbar geführt sind. Die Tragplatten 68 tragen das Formwerkzeug 18, das jeweils ein Paar von Halte- 70, Kopf- 72 und Formbacken 74 aufweist. Im Einzelnen trägt jede Tragplatte 68 eine Halte- 70, eine Kopf- 72 und eine Formbacke 74, die sich paarweise gegenüberliegend aufeinander zu von den einander zugewandten Seiten 76 der Tragplatten 68 weg erstrecken. Die jeweilige Haltebacke 70 ist im Mittenbereich der der Basisplatte 56 abgewandten Seite 78 der Tragplatten 68 festgelegt. In den einander zugewandten Seiten der Haltebacken 70 ist jeweils eine teilkreisförmige Aussparung 80 zum Halten des Vorformlings 22 vorgesehen. An die jeweilige Haltebacke 70 schließt sich auf der der anderen Tragplatte 68 zugewandten Seite 76 jeder Tragplatte 68 in Richtung der Basisplatte 56 zunächst die Kopfbacke 72 und darauffolgend die Formbacke 74 an.

In dem der Basisplatte 56 abgewandten Randbereich und, in Längsrichtung gesehen, im Mittenbereich der jeweiligen Gehäuseplatte 62 ist auf den voneinander abgewandten Seiten 82 der Gehäuseplatten 62 jeweils ein Tragplatten-Antrieb 84 festgelegt, der drückend oder ziehend auf die der jeweiligen Gehäuseplatte 62 benachbarte Tragplatte 68 einwirkt, so dass die Tragplatten 68 mittels des Tragplatten-Antriebes 84 zum Schließen des Formwerkzeuges 18 aufeinander zu und zum Öffnen des Formwerkzeuges 18 voneinander weg bewegbar sind. In einem, mit Ausnahme des Fortsatzes 64, über die Gehäuseplatten 62 in Richtung von der Basisplatte 56 weg hinausragenden Bereich der Tragplatten 68 ist auf den voneinander abgewandten Seiten 86 der Tragplatten 68 jeweils ein Kopfbacken-Antrieb 88 festgelegt, der drückend oder ziehend auf die jeweils benachbarte Kopfbacke 72 einwirkt, so dass die Kopfbacken 72 unabhängig von den Halte- 70 und Formbacken 74 aufeinander zu und voneinander weg bewegbar sind. Die Verfahrrichtung der Tragplatten 68 ist quer zur Verfahrrichtung der Greifereinrichtung 20 ausgerichtet.

Die beiden Zangen 24, 26 sind mittels des Linearantriebes 48 gleichzeitig verfahrbar von einer Vorformposition, der Aufnahmeposition des extrudierten Schlauches 32 durch die Zangen 24, 26, zu einer Übergabeposition, in welcher der Vorformling 22 in das geöffnete Formwerkzeug 18 übergeben wird, und umgekehrt.

Zum optionalen Steuern der Temperatur des gesamten Vorformlings 22 oder eines Teils desselben können entlang seines Verfahrweges in den Figuren nicht dargestellte Kühl-, Heiz-, Abschirm- und/oder Reflexionseinrichtungen vorgesehen sein, wobei die Temperatur des Schlauches 32 bzw. des Vorformlings 22 mittels eines Temperatursensors überwacht werden kann. Die jeweilige Kühleinrichtung kann derart ausgebildet sein, dass diese den Vorformling 22 mittels eines Kühlfluides, vorzugsweise Gas, insbesondere Luft, anströmt. Zum Kühlen des Vorformlings 22 ist es ebenso möglich entsprechend der benötigten Kühlleistung den Transportweg des Vorformlings 22 zu verlängern und/oder die Transportgeschwindigkeit anzupassen, so dass eine Abkühlung auf natürliche Weise durch Abstrahlung von Wärme erreicht wird. Die jeweilige Heizeinrichtung kann als Strahlungsheizeinrichtung, vorzugsweise mit Infrarotstrahlung, ausgebildet sein. Durch ein Beheizen verschiedener Bereiche des Schlauches 32 sind verschiedene Wandstärken des fertigen Behältererzeugnisses realisierbar. Die Abschirm- und Reflexionseinrichtungen (nicht dargestellt) können jeweils als Bleche ausgebildet sein.

Auch können an der Greifereinrichtung 20 oder entlang des Verfahrweges des Vorformlings 22 in den Figuren nicht dargestellte, insbesondere optische, Sensoren vorgesehen sein zum Prüfen des Vorformlings 22, beispielsweise hinsichtlich seiner Geometrie, seiner Abmessungen, seiner Transparenz, seiner Wanddickenverteilung, seiner Temperatur(verteilung), seines Kristallinitätsgrades, seines Gewichts, auf Verunreinigungen und/oder auf Partikeleinlagerungen, wobei die Messwerte des jeweiligen Sensors in eine entsprechende Regelung des Extrusionsprozesses einfließen können.

Es können in den Figuren nicht dargestellte Schutzeinrichtungen zum Schutz des Vorformlings 22 auf dessen Transportweg vorgesehen sein. Beispielsweise kann eine Schutzeinrichtung zum Schutz vor, insbesondere mikrobiellen und/oder partikulären, Verunreinigungen derart ausgebildet sein, dass diese während der Verfahrbewegung des Vorformlings 22 die innere und/oder die äußere Oberfläche 90 des Vorformlings 22 mittels reiner, steriler, also partikel- und keimarmer, und/oder gefilterter Luft oder Inertgas anströmt.

Es können zur Verbesserung von Eigenschaften des Vorformlings 22, insbesondere für eine gezielte Modifikation seiner Oberflächen 90, entlang seines Verfahrweges in den Figuren nicht dargestellte Behandlungseinrichtungen vorgesehen sein, die die innen- und/oder außenseitigen Oberflächen 90 des Vorformlings 22 mittels eines Fluides behandeln. Die Behandlungseinrichtung kann derart eingerichtet sein, dass diese den Vorformling 22 mittels eines Fluides anströmt. Die Verwendung eines reaktiven Fluides, beispielsweise eines fluorhaltigen Gases, ermöglicht die gezielte Modifikation der inneren und/oder äußeren Oberflächen 90 des Vorformlings 22, was zu einer Verbesserung der Barriere-Eigenschaften des zur Herstellung des Vorformlings 22 verwendeten Polymers führt. Bei der Behandlung der Oberfläche 90 mit siloxan-haltigen Gasmischungen, die beispielsweise Hexamethyldisiloxan (HMDSO) oder 1, 1, 1, 3, 3, 3-Hexamethyldisilazan (HMDS) enthalten, kommt es zu einer Inertisierung und zu veränderten Benetzungseigenschaften. Es hat sich gezeigt, dass die Oberflächenmodifikationen bei Temperaturen der Vorformlinge 22 je nach Polymer im Bereich von 150 bis 250 Grad Celsius erfolgen, ohne dass zusätzliche für Beschichtungen typische Maßnahmen, wie ein Aufheizen oder eine Plasmabehandlung, notwendig sind.

Im Folgenden wird das erfindungsgemäße Verfahren näher erläutert:
Zunächst wird der Schlauch 32 mittels des Schlauchkopfes 14 der üblichen Extrusionseinrichtung 12 in vertikaler Extrusionsrichtung (z-Richtung) extrudiert, sodass dieser in einer Vorformposition angeordnet ist (Fig. 1). Dabei sind die Zangen 24, 26 geöffnet.

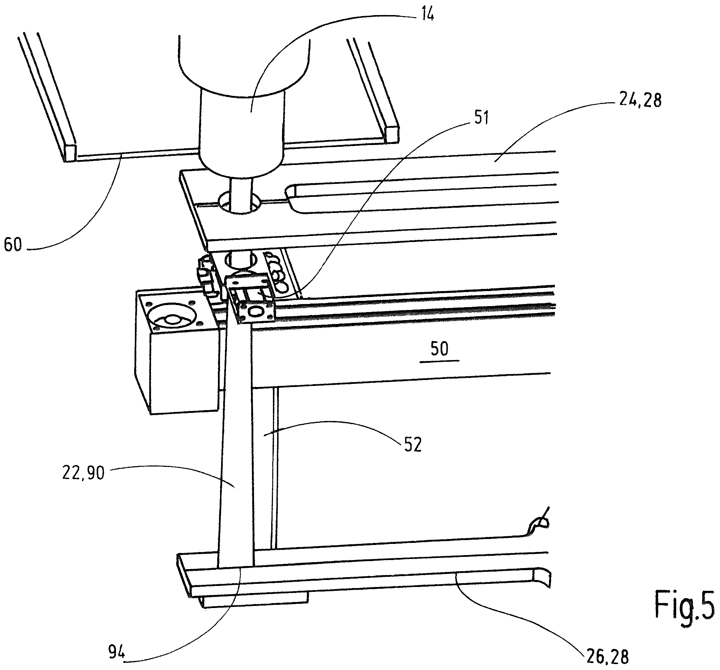

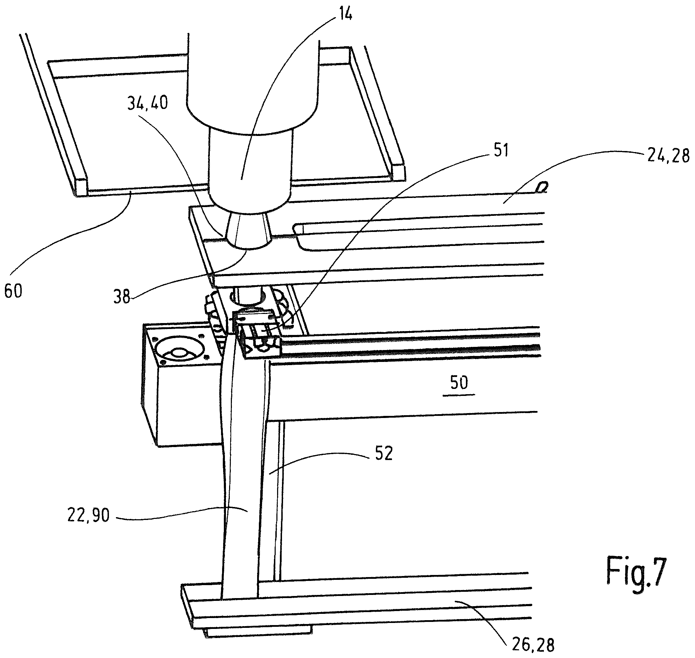

Ist gegebenenfalls das stationär angeordnete Kalibrierelement 51 (Fig. 2, 5) für eine abschnittsweise Kalibrierung des Außendurchmessers des wärmeweichen Schlauches 32 in der Vorformposition vorgesehen, werden zunächst dessen ebenfalls geöffnete Kalibrierbacken 57 den Schlauch 32 beabstandet umfassend geschlossen (Fig. 7). Der in das Innere des Schlauches 32 gerichtete Stützgasimpuls bewirkt ein Anlegen des Schlauches 32 an die beiden Kalibrierbacken 57 des Kalibrierelements 51 und bestimmt somit den Außendurchmesser des wärmeweichen Schlauches 32 im Anlagebereich.

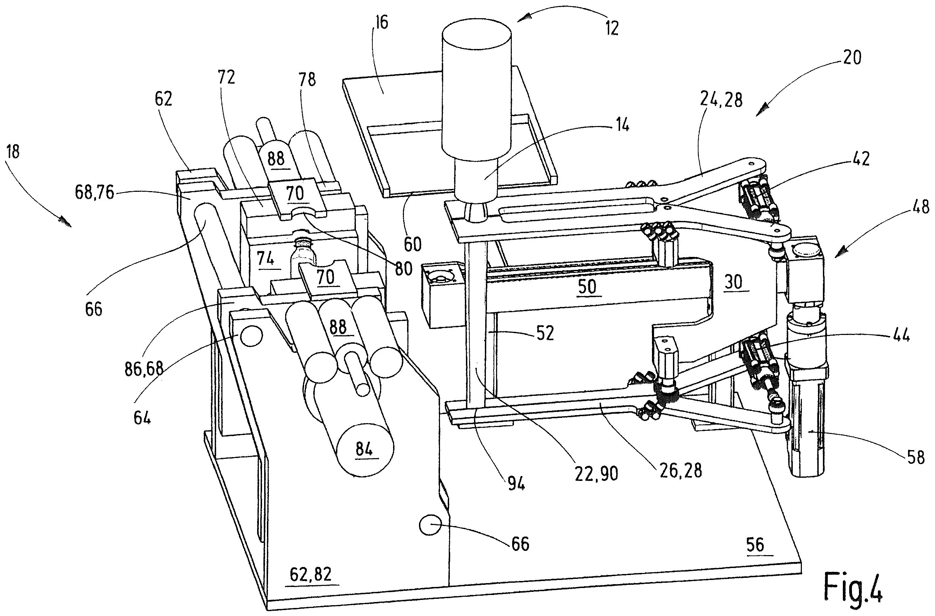

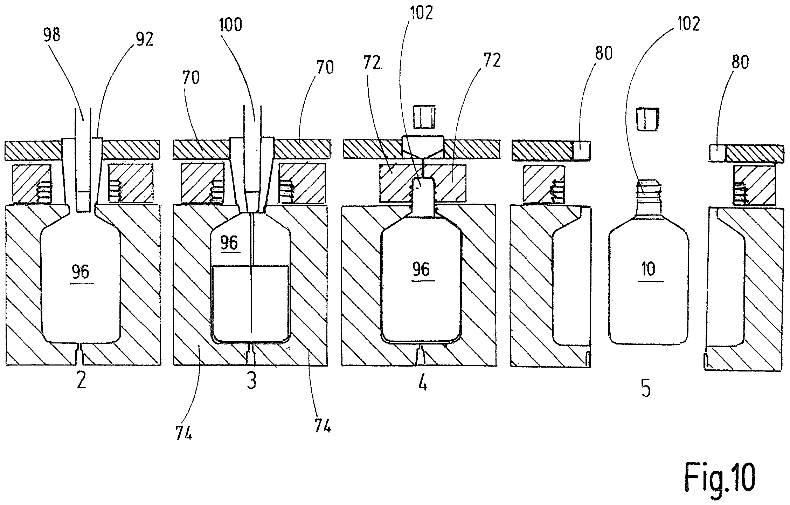

Daraufhin oder gleichzeitig werden mittels des jeweiligen Zangen-Antriebes 42, 44 die Zangen geschlossen (Fig. 4, 7). So wird der Schlauch 32 mittels der unteren Zange 26 an seinem unteren Endbereich geschlossen und gehalten, während die geschlossene obere Zange 24 den wärmeweichen Schlauch 32 mittels deren Greifbacken 34 an seinem oberen Endbereich nur umgibt, jedoch nicht umfassend berührt. Durch den Stützgasimpuls oder einen weiteren Stützgasimpuls wird nunmehr der Schlauch 32 im Bereich der oberen Zange 24 aufgeweitet, an die Greifbacken 34 angelegt und an den Schlitzen 40 durch Unterdruck gehalten. Der Unterdruck wird durch eine in den Figuren nicht dargestellte Vakuumpumpe erzeugt, die mittels einem sich durch den jeweiligen Schenkel 28 erstreckenden Kanal (nicht dargestellt) verbunden ist. Hiermit gelingt es überraschenderweise auch große Öffnungen 92 (Fig. 10) von einem Durchmesser von bis zu circa 6 cm stabil offen zu halten, was eine schnelle und damit kosteneffiziente Befüllung durch einen entsprechend großen Fülldorn 100 (Fig. 10) ermöglicht.

Falls das Kalibrierelement 51 vorgesehen ist, werden die Kalibrierbacken 57 des Kalibrierelements 51, nachdem der Schlauch 32 an den Greifbacken 34 der ersten Zange 24 anliegt, mittels des pneumatischen Antriebes 53 geöffnet. Somit gelingt mittels des Kalibrierelements 51 eine werkzeuggebundene Formgebung in zwei räumlich und zeitlich getrennten Schritten: In einem ersten Schritt erfolgt eine Formgebung des Schlauches 32 mittels des Kalibrierelements 51 bereits vor dessen Abtrennen in der Vorformposition und in einem zweiten Schritt nach dem Einbringen des Vorformlings 22 in das eigentliche Formwerkzeug 18 in der Übergabeposition. Ferner gelingt es durch das Kalibrierelement 51 erfindungsgemäß den Schlauch 32 im Anlegebereich der mittels der Temperiereinrichtung gekühlten Kalibrierbacken 57 abzukühlen und so gezielt die Form des Schlauches 32 zu stabilisieren.

Nachfolgend wird der Schlauch 32 zwischen dem Schlauchkopf 14 und der Greifereinrichtung 20 unter Bildung einer Öffnung 92 an seinem oberen Ende abgetrennt, wodurch der Vorformling 22 vom Schlauch 32 abgelängt ist.

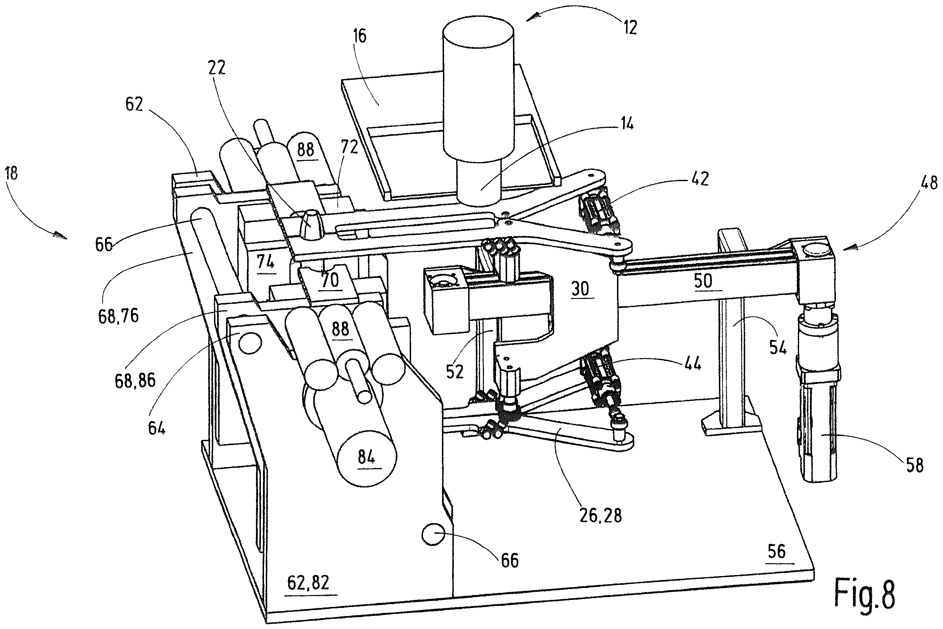

Dann wird der Vorformling 22 von der Greifereinrichtung 20, die den Vorformling 22 in einer einseitig geöffneten, vertikalen Ausrichtung hält, mittels des Linearantriebes 48 ausgehend von der Vorformposition in linearer Transportrichtung entlang der Schiene 50 des Linearantriebs 48 in das geöffnete Formwerkzeug 18 transportiert, in der der Vorformling 22 in einer Hauptformposition angeordnet ist (Fig. 8).

Optional erfolgt diese Bewegung zunächst in vertikaler Richtung (z-Richtung) nach unten und sodann quer dazu zur stationären Form in Übergabeposition.

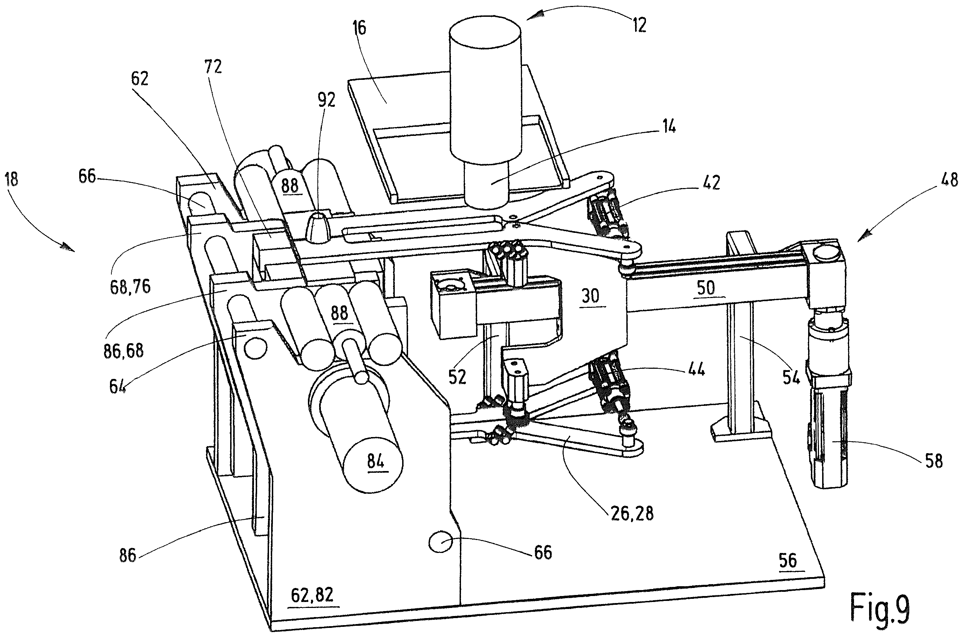

Zunächst wird die untere Zange 26 geöffnet und es werden mittels des Tragplatten-Antriebes 84 die Tragplatten 68 zugefahren, insbesondere die Kopfbacken 72 von den Tragplatten 68 mitgenommen und die Halte- 70 und Formbacken 74 zugefahren, so dass die Halte- 70 und die Formbacken 74 den Vorformling 22 zwischen sich haltend aufnehmen (Fig. 9). Dabei wird der Vorformling 22 auf seiner geschlossenen Unterseite 94 mittels der Formbacken 74 verschweißt. Danach wird durch Öffnen der oberen Zange 24 die Übergabe des Vorformlings 22 von der Greifereinrichtung 20 in das Formwerkzeug 18 abgeschlossen. Durch die im Wesentlichen frei zugängliche Anordnung des Vorformlings 22 während der Verfahrbewegung ist dieser für weitere Verfahrensschritte zugänglich.

Anschließend wird mit dem Vorformling 22 ein üblicher Blasform-, Füll- und Schließprozess durchgeführt. So wird unter Verwendung der Formbacken 72 zunächst der Behälterkörper 96 des Behältererzeugnisses 10 mittels einer Blasformeinrichtung 98 blasgeformt (Fig. 10 - Schritt 2). Darauffolgend wird der Behälterkörper 96 über seine Öffnung 92 mittels einer Fülleinrichtung 100 mit Füllgut befüllt (Fig. 10 - Schritt 3). Dann wird durch ein Zusammenfahren der Kopfbacken 72 des Formwerkzeugs 18 mittels des jeweiligen Kopfbacken-Antriebes 88 ein Kopfteil 102 des befüllten Behältererzeugnisses 10 geformt, nämlich das Kopfteil 102 nach außen hin verschlossen (Fig. 10 - Schritt 4). Dadurch, dass jede Kopfbacke 72 mittels eines Kopfbacken-Antriebes 88 in Form eines hydraulischen Zylinders und jede Formbacke 74 mittels eines Tragplatten-Antriebes 84 in Form eines weiteren hydraulischen Zylinders schließbar sind, lässt sich der Blasform- und Füllprozess mit einem besonders hohen Druck durchführen.

Danach wird die Greifereinrichtung 20 entlang der Schiene 50 in die Extrusionsposition rücktransportiert und gleichzeitig geöffnet für eine erneute Abfolge der voranstehenden Verfahrensschritte. Schließlich wird mit Zurückfahren von Form- 74, Kopf- 72 und Haltebacken 70 (Fig. 10 - Schritt 5) das fertige Behältererzeugnis 10 aus dem Formwerkzeug 18 entfernt, was auch mit einem zusätzlichen Manipulator, wie einem Roboterarm, erfolgen kann.

Optional ist es möglich - wie in DE 10 2014 008 611 A1 detailliert ausgeführt - zwischen dem Befüllen (Fig. 10, Schritt 3) und dem Verschließen des Behältererzeugnisses 10 (Fig.10, Schritt 4) einen Einsatz in den oberen Teil des Behältererzeugnisses 10 einzubringen.

Optional und vereinfachend ist es des Weiteren möglich, eine der Formbacken 74 stationär auszuführen, indem diese auf der Basisplatte 56 fixiert wird, und lediglich die andere Formbacke 74 zu bewegen, wodurch die Anzahl der Tragplattenantriebe 84 minimiert wird. Eine solche einseitige Schließbewegung setzt voraus, dass der Vorformling sich immer in der Mitte zwischen den beiden Formbacken 74 befindet, was durch eine einfach zu realisierende Querbewegung der Greifeinrichtung 20 möglich wird.

Optional und erheblich vereinfachend ist es des Weiteren möglich, dass auf die Haltebacken 70 als Teil des Formwerkzeugs 18 verzichtet wird, und eine Haltefunktion durch die obere Zange 24 der Greifereinrichtung 20 übernommen wird, indem der Vorformling 22, auch während er sich schon zumindest teilweise im Formwerkzeug 18 befindet, durch die obere Zange 24 der Greifereinrichtung 20 zumindest bis zum Beginn seiner weiteren Formung durch einen Druckgradienten gehalten wird, was steuerungstechnisch einfach zu realisieren ist.

Weiterhin vorteilhaft kann die Entnahme des Behältererzeugnisses 10 nach oben hin erfolgen, was erfindungsgemäß dadurch möglich ist, dass der Raum oberhalb der Form frei ist, d. h. nicht durch den Schlauchkopf 14 der Extrusionseinrichtung 12 eingenommen wird.

Vorteilhaft kann - wie bereits angesprochen - die Greifeinrichtung 20 und mit ihr der Vorformling 22 nach dem Abtrennen zunächst in vertikaler Richtung (z-Richtung) verfahrbar sein. Dies ermöglicht es, - unter Beibehaltung einer kontinuierlichen Extrusion eines Schlauches 32 - auf die gemäß dem Stand der Technik übliche technisch aufwändige Kippbewegung des Extruders, die eine Vertikalbewegung des Schlauchkopfs 14 zur Folge hat, zu verzichten. Hierzu wird nach dem Abtrennen des Vorformlings 22 vom Schlauch 32 der Vorformling 22 mithilfe der Greifeinrichtung 20 in Extrusionsrichtung (z-Richtung) nach unten bewegt, bevor der Transport quer dazu zur Hauptformposition beginnt.

Die erfindungsgemäße Greifeinrichtung 20 mit ihren beiden Zangen 24, 26 hat sich insbesondere zum Transport von Vorformlingen geringen Gewichts als sehr vorteilhaft gezeigt. Während bei Vorformlingen 22 mit einem Gewicht von mehr als ca. 0,1 kg während des Transports häufig eine Fixierung durch lediglich die obere Zange 24 für stabile Produktionsprozesse mit geringem Ausschuss ausreichend ist, ist bei Leichtgewichtsvorformlingen 22 zur Herstellung von Leichtgewichtsbehältern mit einem Gewicht von weniger als circa 0,06 kg ebenso wie bei Mehrfach-Schlauchköpfen eine erfindungsgemäße Fixierung durch mehrere Zangen 24, 26 vorteilhaft.

Die so hergestellten Leichtgewichtsbehälter - wie Flaschen oder Ampullen - können bevorzugt für medizinische Zwecke, beispielsweise für Infusionslösungen, Inhalativa, Ophthalmika, Injektabila oder Diagnostika und orale Stärkungsmittel verwendet werden.

## Patentansprüche

1. Verfahren zum Herstellen mindestens eines geformten, befüllten und verschlossenen Behältererzeugnisses (10) mit zumindest den folgenden Verfahrensschritten:
- Extrusion eines Schlauches (32) mittels einer Extrusionseinrichtung (12) unter Verwendung von Stützgas in vertikaler Extrusionsrichtung in einer Vorformposition;
- Schließen des Schlauches (32) an seinem unteren Ende und Abtrennen desselben an seinem oberen offenen Ende;
- Transport des derart abgelängten Vorformlings (22) mittels einer Greifereinrichtung (20) in linearer Transportrichtung quer zur Extrusionsrichtung von der Vorformposition in ein geöffnetes Formwerkzeug (18);
- Übergabe des Vorformlings (22) in das geöffnete Formwerkzeug (18) mittels der Greifereinrichtung (20) in einer Hauptformposition;
- Schließen des Formwerkzeuges (18) zwecks Weiterformen des Vorformlings (22) durch einen Druckgradienten;
- Befüllen und Verschließen des Vorformlings (22); und
- Rücktransport der Greifereinrichtung (20) zu der Vorformposition für eine erneute Abfolge der vorstehenden Verfahrensschritte.

2. Verfahren nach Anspruch 1, **dadurch gekennzeichnet, dass** der extrudierte Schlauch (32) in der Vorformposition durch eine untere Zange der Greifereinrichtung (20) an seinem unteren Ende verschlossen wird.

3. Verfahren nach Anspruch 1 oder 2, **dadurch gekennzeichnet, dass** der extrudierte Schlauch (32) nach dem Verschließen an seinem unteren Ende mittels Stützgasdruck über einen Schlauchkopf (14) der Extrusionseinrichtung (12) an eine obere Zange (24) in der Greifereinrichtung (20) angelegt und gehalten wird.

4. Verfahren nach einem der vorstehenden Ansprüche, **dadurch gekennzeichnet, dass** der Vorformling (22) in der Vorformposition mittels einer Schneideinrichtung (16) vom extrudierten Schlauch (32) zwischen dem Schlauchkopf (14) und der Greifereinrichtung (20) abgetrennt wird.

5. Verfahren nach einem der vorstehenden Ansprüche, **dadurch gekennzeichnet, dass** in der Vorformposition die Greifereinrichtung (20) mit dem Vorformling (22) in vertikaler Richtung (z-Richtung) nach unten, jedoch der Schlauchkopf (14) während der kontinuierlichen Extrusion des Schlauches (32) nicht bewegt wird.

6. Verfahren nach einem der vorstehenden Ansprüche, **dadurch gekennzeichnet, dass** der Vorformling (22) aus mindestens einem teilkristallinen oder amorphen Polyolefin besteht, der ein Gewicht von weniger als 0,1 kg, bevorzugt weniger als 0,07 kg, und eine mittlere Wandstärke von weniger als 0,3 cm, bevorzugt weniger als 0,2 cm, aufweist und zum Zeitpunkt des Abtrennens seine mittlere Temperatur im Bereich von 150 °C bis 210 °C liegt.

7. Verfahren nach einem der vorstehenden Ansprüche, **dadurch gekennzeichnet, dass** der Vorformling (22) in der Vorformposition und während des Transports mittels der Greifeinrichtung (20) in seiner im Wesentlichen vertikalen, nach oben hin offenen Ausrichtung gehalten wird.

8. Verfahren nach einem der vorstehenden Ansprüche, **dadurch gekennzeichnet, dass** während seines Transportes von der Vorformposition zur Hauptformposition der Vorformling (22) zumindest zeitweise an mindestens zwei unterschiedlichen Stellen, bevorzugt an seinen beiden Enden, mittels mindestens zweier Zangen (24, 26) der Greifereinrichtung (20) gehalten wird.

9. Verfahren nach einem der vorstehenden Ansprüche, **dadurch gekennzeichnet, dass** neben der Formgebung des Vorformlings (22) im Formwerkzeug (18) an der Hauptformposition mindestens eine weitere, bevorzugt werkzeuggebundene, Formgebung des Vorformlings (22) und/oder des Schlauches (32) außerhalb der Hauptformposition stattfindet.

10. Verfahren nach Anspruch 9, **dadurch gekennzeichnet, dass** eine weitere Formgebung des Schlauches (32) in der Vorformposition stattfindet, indem zumindest ein Abschnitt des Schlauches (32) an Kalibrierbacken (57) einer Kalibriereinheit (51) zur Begrenzung seines Außendurchmessers angelegt wird.

11. Verfahren nach einem der vorstehenden Ansprüche, **dadurch gekennzeichnet, dass** zumindest ein Teil des Schlauches (32) in der Vorformposition mittels eines kurzen Stützgasimpulses nahezu zeitgleich an die Kalibrierbacken (57) einer Kalibriereinheit (51) und an die obere Zange (24) der Greifereinrichtung (20) angelegt wird.

12. Verfahren nach einem der vorstehenden Ansprüche, **dadurch gekennzeichnet, dass** entweder das Formwerkzeug (18) mittels einander gegenüberliegender Haltebacken (70) mit deren Schließen den Vorformling (22) von der Greifereinrichtung (20) übernimmt; oder dass der sich zumindest teilweise im Formwerkzeug (18) befindliche Vorformling (22) zumindest bis zum Beginn seiner weiteren Formung durch die obere Zange (24) der Greifereinrichtung (20) gehalten wird.

13. Verfahren nach einem der vorstehenden Ansprüche, **dadurch gekennzeichnet, dass** das Formwerkzeug (18) um den Vorformling (22) durch eine einseitige Bewegung nur einer der Formbacken (74) geschlossen wird, während die andere Formbacke (74) stationär fixiert wird.

14. Verfahren nach einem der vorstehenden Ansprüche, **dadurch gekennzeichnet, dass** zumindest zeitweise während des Transports zwischen der Vorformposition und der Übergabe an das Formwerkzeug (18) der Vorformling (22) einer Messung und/oder Prüfung unterzogen wird, insbesondere zur Bestimmung seiner Abmessungen und/oder seines Gewichts und/oder seiner Temperaturverteilung und/oder seiner Transparenz und/oder seiner Kristallinität und/oder möglicher Verunreinigungen.

15. Verfahren nach einem der vorstehenden Ansprüche, **dadurch gekennzeichnet, dass** es sich bei dem befüllten Behältererzeugnis (10) um einen Behälter für medizinische Zwecke, insbesondere einen Leichtgewichtsbehälter mit einem Volumen von weniger als 2 Litern und/ oder einem Leergewicht von weniger als 0,06 kg handelt.

16. Vorrichtung zum Durchführen eines Verfahrens nach einem der vorstehenden Ansprüche mit zumindest den folgenden Komponenten:
- Extrusionseinrichtung (12) zum Extrusion eines Schlauches (32);
- Stützgaseinrichtung;
- Schließeinrichtung zum schließen des Schlauches an seinem unteren Ende und Abtrennen desselben an seinem oberen offenen Ende;
- Transporteinrichtung zum Transport des abgelängten Vorformlings (22) mittels einer Greifereinrichtung (20) in linearer Transportrichtung quer zur Extrusionsrichtung von der Vorformposition in ein geöffnetes Formwerkzeug (18);
- Formwerkzeug (18);
- Befülleinrichtung und Verschließeinrichtung zum Befüllen und Verschließen des Vorformlings.

17. Vorrichtung nach Anspruch 16, **dadurch gekennzeichnet, dass** die Greifereinrichtung (20) mindestens zwei voneinander axial beabstandete Zangenpaare (24, 26) umfasst, die zwischen sich mindestens einen Vorformling (22) aufnehmen, wobei das obere Zangenpaar (24) eine Aufnahmeöffnung (38) für das obere offene Ende (92) des Vorformlings (22) freihält und das untere Zangenpaar (26) ein Schließen des Schlauches (32) und endseitiges Halten in der Greifereinrichtung (20) ermöglicht.

18. Vorrichtung nach Anspruch 17, **dadurch gekennzeichnet, dass** die beiden Zangenpaare (24, 26) gemeinsam von einer Vorformposition in eine Übergabeposition an einem Formwerkzeug (18) und zurück verfahrbar, bevorzugt mittels eines Linearantriebes (48), geführt sind.

19. Vorrichtung nach einem der Ansprüche 16 bis 18, **dadurch gekennzeichnet, dass** das, bevorzugt nur einseitig bewegliche, Formwerkzeug (18) zumindest aus einem Paar Form- (74) und Kopfbacken (72) besteht und bevorzugt keine Haltebacken (70) aufweist.

20. Vorrichtung nach einem der Ansprüche 16 bis 19, **dadurch gekennzeichnet, dass** die Extrusionseinrichtung (12) einen Schlauchkopf (14) aufweist, der neben dem Erzeugen eines extrudierten Kunststoffschlauches (32) diesen auch mittels eines Stützgases, bevorzugt Stützluft, formt und/oder an Oberflächen wie die einer Zange (24) und/ oder von Kalibrierbacken (57) anlegt.

## Claims

1. Method for producing at least one moulded, filled and sealed container product (10) having at least the following method steps:
- Extruding a tube (32) in a preform position in the vertical extrusion direction by means of an extrusion device (12) using supporting gas;
- Closing the tube (32) at its lower end and cutting it off at its upper open end;
- Transporting the parison (22), cut to length in this manner, from the preform position into an open moulding tool (18) in the linear transport direction transverse to the extrusion direction by means of a gripper device (20);
- Transferring the parison (22) into the open moulding tool (18) in a main mould position by means of the gripper device (20);
- Closing the moulding tool (18) for the purpose of further moulding the parison (22) by means of a pressure gradient;
- Filling and sealing the parison (22); and
- Transporting the gripper device (20) back to the preform position for a new sequence of the above method steps.

2. Method according to claim 1, **characterised in that** the extruded tube (32) in the preform position is sealed at its lower end by a lower gripper of the gripper device (20).

3. Method according to claim 1 or 2, **characterised in that**, after sealing at its lower end, the extruded tube (32) is placed by means of supporting gas pressure via a tube head (14) of the extrusion device (12) against an upper gripper (24) in the gripper device (20) and held.

4. Method according to one of the preceding claims, **characterised in that** the parison (22) in the preform position is separated from the extruded tube (32) between the tube head (14) and the gripper device (20) by means of the cutting device (16).

5. Method according to one of the preceding claims, **characterised in that**, in the preform position, the gripper device (20) with the parison (22) is moved downwards in the vertical direction (z direction), but the tube head (14) is not moved during continuous extrusion of the tube (32).

6. Methods according to one of the preceding claims, **characterised in that** the parison (22) consists of at least one semi-crystalline or amorphous polyolefin, which has a weight of less than 0.1 kg, preferably less than 0.07 kg, and an average wall thickness of less than 0.3 cm, preferably less than 0.2 cm, and at the time of separation its average temperature ranges between 150 °C and 210 °C.

7. Method according to one of the preceding claims, **characterised in that** the parison (22) is held in its substantially vertical, upwardly open orientation in the preform position and during transport by means of the gripper device (20).

8. Method according to one of the preceding claims, **characterised in that**, during its transport from the preform position to the main mould position, the parison (22) is held at least temporarily at at least two different points, preferably at it two ends, by means of at least two grippers (24, 26) of the gripper device (20).

9. Method according to one of the preceding claims, **characterised in that**, in addition to shaping of the parison (22) in the moulding tool (18) at the main mould position, at least one further, preferably tool-bound shaping of the parison (22) and/or the tube (32) takes place outside the main mould position.

10. Method according to claim 9, **characterised in that** a further shaping of the tube (32) takes place in the preform position by placing at least a section of the tube (32) against calibration jaws (57) of a calibration unit (51) to limit its external diameter.

11. Method according to one of the preceding claims, **characterised in that** at least a part of the tube (32) in the preform position is placed almost simultaneously against the calibration jaws (57) of a calibration unit (51) and against the upper gripper (24) of the gripper device (20) by means of a short supporting gas pulse.

12. Method according to one of the preceding claims, **characterised in that** either the moulding tool (18) takes over the parison (22) from the gripper device (20) by means of opposing holding jaws (70) as they close; or **in that** the parison (22) located at least partially in the moulding tool (18) is held by the upper gripper (24) of the gripper device (20) at least until the start of its further moulding.

13. Method according to one of the preceding claims, **characterised in that** the moulding tool (18) is closed around the parison (22) by a one-sided movement of only one of the mould jaws (74), while the other mould jaw (74) is stationarily fixed.

14. Method according to one of the preceding claims, **characterised in that**, at least temporarily during transport between the preform position and the transfer to the moulding tool (18), the parison (22) is subjected to a measurement and/or an examination, in particular to determine its dimensions and/or its weight and/or its temperature distribution and/or its transparency and/or its crystallinity and/or possible impurities.

15. Method according to one of the preceding claims, **characterised in that** the filled container product (10) is a container for medical purposes, in particular a lightweight container with a volume of less than 2 litres and/or an empty weight of less than 0.06 kg.

16. Apparatus for carrying out a method according to one of the preceding claims, having at least the following components:
- Extrusion device (12) for extruding a tube (32);
- Supporting gas device;
- Closing device for closing the tube at its lower end and cutting it off at its upper open end;
- Transport device for transporting the parison (22), cut to length in this manner, from the preform position into an open moulding tool (18) in the linear transport direction transverse to the extrusion direction by means of a gripper device (20);
- Moulding tool (18);
- Filling device and sealing device for filling and sealing the parison.

17. Apparatus according to claim 16, **characterised in that** the gripper device (20) comprises at least two pairs of grippers (24, 26), which are axially spaced apart from each other and which receive at least one parison (22) between them, wherein the upper pair of grippers (24) keeps free a receiving opening (38) for the upper open end (92) of the parison (22) and the lower pair of grippers (26) enables the tube (32) to be closed and held at the end in the gripper device (20).

18. Apparatus according to claim 17, **characterised in that** the two pairs of grippers (24, 26) are guided jointly from a preform position into a transfer position on a moulding tool (18) and back, preferably by means of a linear drive (48).

19. Apparatus according to one of claims 16 to 18, **characterised in that** the moulding tool (18), which is preferably movable only on one side, consists of at least one pair of moulding jaws (74) and head jaws (72) and preferably has no holding jaws (70).

20. Apparatus according to one of claims 16 to 19, **characterised in that** the extrusion device (12) has a tube head (14) which, in addition to producing an extruded plastic tube (32), also moulds the latter by means of a supporting gas, preferably supporting air, and/or applies it to surfaces such as those of a gripper (24) and/or of calibration jaws (57).

## Revendications

1. Procédé de fabrication d'au moins un produit (10) de récipient formé, rempli et fermé comprenant au moins les stades de procédé suivants :
- extrusion d'un tuyau (32) souple au moyen d'un dispositif (12) d'extrusion en utilisant du gaz d'appui dans une direction d'extrusion verticale en une position de préformage ;
- fermeture du tuyau (32) souple à son extrémité inférieure et séparation du même à son extrémité supérieure ouverte ;
- transport de l'ébauche (22) ainsi tronçonnée au moyen d'un dispositif (20) de préhension dans une direction de transport linéaire transversalement à la direction d'extrusion de la position de préformage à un outil (18) de formage ouvert ;
- transfert de l'ébauche (22) dans l'outil (18) de formage ouvert au moyen du dispositif (20) de préhension en une position de formage principale ;
- fermeture de l'outil (18) de formage en vue de former davantage l'ébauche (22) par un gradient de pression ;
- remplissage et fermeture de l'ébauche (22) ; et
- retour du dispositif (20) de préhension à la position de préformage pour une succession renouvelée des stades de procédé précédents.

2. Procédé suivant la revendication 1, **caractérisé en ce que** l'on ferme, dans la position de préformage, le tuyau (32) souple extrudé à son extrémité inférieure, par une pince inférieure du dispositif (20) de préhension.

3. Procédé suivant la revendication 1 ou 2, **caractérisé en ce que** l'on met et maintient le tuyau (32) souple extrudé, après la fermeture à son extrémité inférieure, au moyen d'une pression de gaz d'appui sur une pince (24) supérieure du dispositif (20) de préhension au moyen d'une pression de gaz d'appui par une tête (14) pour tuyau souple du dispositif (12) d'extrusion.

4. Procédé suivant l'une des revendications précédentes, **caractérisé en ce que** l'on sépare, entre la tête (14) pour tuyau souple et le dispositif (20) de préhension, l'ébauche (22) dans la position de préformage du tuyau (32) souple extrudé au moyen d'un dispositif (16) de coupe.

5. Procédé suivant l'une des revendications précédentes, **caractérisé en ce que**, dans la position de préformage, on déplace le dispositif (20) de préhension avec l'ébauche (22) dans la direction verticale (direction z) vers le bas, mais on ne déplace pas la tête (14) pour le tuyau souple pendant l'extrusion continue du tuyau (32) souple.

6. Procédé suivant l'une des revendications précédentes, **caractérisé en ce que** l'ébauche (22) est en au moins une polyoléfine partiellement cristalline ou amorphe, qui a un poids de moins de 0,1 kg, de préférence de moins de 0,07 kg, et une épaisseur moyenne de paroi de moins de 0,3 cm, de préférence de moins de 0,2 cm, et à l'instant de la séparation sa température moyenne est dans la plage de 150°C à 210°C.

7. Procédé suivant l'une des revendications précédentes, **caractérisé en ce que** l'on maintient dans son orientation sensiblement verticale ouverte vers le haut l'ébauche (22) dans la position de préformage et pendant le transport au moyen du dispositif (20) de préhension.

8. Procédé suivant l'une des revendications précédentes, **caractérisé en ce que**, pendant son transport de la position de préformage à la position de formage principale, on maintient l'ébauche (22) au moins de temps à autre en au moins deux points différents, de préférence en ses deux extrémités, au moyen de deux pinces (24, 26) du dispositif (20) de préhension.

9. Procédé suivant l'une des revendications précédentes, **caractérisé en ce que**, outre le façonnage de l'ébauche (22) dans l'outil (18) de formage, a lieu, en la position de formage principale, au moins un autre façonnage, de préférence lié à l'outil, de l'ébauche (22) et/ou du tuyau (32) souple en dehors de la position de formage principale.

10. Procédé suivant la revendication 9, **caractérisé en ce que**, un autre façonnage du tuyau (32) souple a lieu dans la position de préformage, par le fait que l'on applique au moins un tronçon du tuyau (32) souple à des mâchoires (57) de calibrage d'une unité (51) de calibrage, pour la limitation de son diamètre extérieur.

11. Procédé suivant l'une des revendications précédentes, **caractérisé en ce que** l'on applique au moins une partie du tuyau (32) souple dans la position de préformage, au moyen d'une courte impulsion de gaz d'appui, à peu près en même temps aux mâchoires (57) de calibrage d'une unité (51) de calibrage et à la pince (24) supérieure du dispositif (20) de préhension.

12. Procédé suivant l'une des revendications précédentes, **caractérisé en ce que**, ou bien l'outil (18) de formage prend en charge, au moyen de mâchoires (70) de maintien opposées l'une à l'autre par leur fermeture, l'ébauche (22) du dispositif (20) de préhension ; ou bien on maintient par la pince (24) supérieure du dispositif (20) de préhension l'ébauche (22) se trouvant au moins dans l'outil (18) de formage au moins jusqu'au début de son autre formage.

13. Procédé suivant l'une des revendications précédentes, **caractérisé en ce que** l'on ferme l'outil (18) de formage autour de l'ébauche (22) par un mouvement d'un seul côté de seulement l'une des mâchoires (74) de formage, tandis que l'on immobilise de manière fixe l'autre mâchoire (74) de formage.

14. Procédé suivant l'une des revendications précédentes, **caractérisé en ce que** l'on soumet à une mesure et/ou un contrôle l'ébauche (22) au moins de temps en temps pendant le transport entre la position de préformage et le transfert à l'outil (18) de formage, en particulier pour la détermination de ses dimensions et/ou de son poids et/ou de sa répartition de température et/ou de sa transparence et/ou de sa cristallinité et/ou d'éventuelles impuretés.

15. Procédé suivant l'une des revendications précédentes, **caractérisé en ce que** le produit (10) de récipient rempli est un récipient à des fins médicales, en particulier un récipient de poids léger d'un volume de moins de 2 litres et/ou d'un poids à vide de moins de 0,06 kilo.

16. Installation pour effectuer un procédé suivant l'une des revendications précédentes, comprenant au moins les composants suivants :
- dispositif (12) d'extrusion pour l'extrusion d'un tuyau (32) souple ;
- dispositif à gaz d'appui ;
- dispositif de fermeture pour la fermeture du tuyau souple à son extrémité inférieure et séparation du même à son extrémité supérieure ouverte ;
- dispositif de transport pour le transport de l'ébauche (22) tronçonnée au moyen d'un dispositif (20) de préhension dans une direction de transport linéaire transversalement à la direction d'extrusion de la position de préformage à un outil (18) de formage ouvert ;
- outil (18) de formage ;
- dispositif de remplissage et dispositif de fermeture pour remplir et fermer l'ébauche.

17. Installation suivant la revendication 16, **caractérisée en ce que** le dispositif (20) de préhension comprend au moins deux paires (24, 26) de pinces à distance axialement l'une de l'autre, qui reçoivent entre elles au moins une ébauche (22), dans laquelle la paire (24) supérieure de pinces laisse libre une ouverture (38) de réception de l'extrémité (92) supérieure ouverte de l'ébauche (22) et la paire (26) inférieure de pinces rend possible une fermeture du tuyau (32) souple et un maintien du côté de l'extrémité dans le dispositif (20) de préhension.

18. Installation suivant la revendication 17, **caractérisée en ce que** les deux paires (24, 26) de pinces sont guidées conjointement d'une position de préformage à une position de transfert à un outil (18) de formage et peuvent être déplacées en retour, de préférence au moyen d'un entraînement (48) linéaire.

19. Installation suivant l'une des revendications 16 à 18, **caractérisée en ce que** l'outil (18) de formage, de préférence mobile seulement d'un côté, est constitué d'au moins une paire de mâchoires de formage (74) et de tête (72) et n'a pas, de préférence, de mâchoires (70) de maintien.

20. Installation suivant l'une des revendications 16 à 19, **caractérisée en ce que** le dispositif (12) d'extrusion a une tête (14) pour tuyau souple, qui outre la production d'un tuyau (32) souple en matière plastique extrudée forme celui-ci également au moyen d'un gaz d'apport, de préférence d'air d'apport et/ou l'applique à des surfaces comme la une pince (24) et/ou des mâchoires (57) de calibrage.
